(19) Europäisches Patentamt
European Patent Office
Office européen des brevets

(11) Veröffentlichungsnummer: **0 237 597**
**B1**

(12) # EUROPÄISCHE PATENTSCHRIFT

(45) Veröffentlichungstag der Patentschrift: **29.11.89**

(51) Int. Cl.⁴: **C 08 G 77/10**

(21) Anmeldenummer: **86103670.5**

(22) Anmeldetag: **18.03.86**

(54) **Kontinuierliches Verfahren zur Änderung des Molekulargewichts von linearen oder cyclischen Organo(poly)siloxanen.**

(43) Veröffentlichungstag der Anmeldung: **23.09.87 Patentblatt 87/39**

(45) Bekanntmachung des Hinweises auf die Patenterteilung: **29.11.89 Patentblatt 89/48**

(84) Benannte Vertragsstaaten: **AT BE CH DE FR GB IT LI NL**

(56) Entgegenhaltungen:
**EP-A- 0 021 683**
**EP-A- 0 031 063**
**EP-A- 0 065 925**
**FR-A- 1 159 254**
**US-A- 2 460 805**
**US-A- 3 903 047**

(73) Patentinhaber: **WACKER-CHEMIE GMBH, Prinzregentenstrasse 22, D-8000 München 22 (DE)**

(72) Erfinder: **Riederer, Manfred, Dr. Dipl.-Chem., Kreislerweg 4, D-8263 Burghausen (DE)**

**EP 0 237 597 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Kontinuierliche Verfahren zur Änderung des Molekulargewichts von linearen oder cyclischen Organo(poly)siloxanen mittels Katalysator, der mindestens bei der jeweiligen Reaktionstemperatur im Reaktionsgemisch fest ist, wobei diese Verfahren bei vermindertem Druck, dem Druck der umgebenden Atmosphäre oder höherem Druck durchgeführt werden können, sind bereits bekannt. Hierzu wird z.B. auf GB-1 488 369 und GB-1 488 370 (beide ausgegeben 12. Oktober 1977 und beide General Electric Company) verwiesen, wo jeweils ein Festbett-Katalysator verwendet wird.

Es bestand nun die Aufgabe, ein kontinuierliches Verfahren zur Änderung des Molekulargewichts von linearen oder cyclischen Organo(poly)siloxanen mittels Katalysator, der mindestens bei der jeweiligen Reaktionstemperatur im Reaktionsgemisch fest ist, bereitzustellen, das bei Verwendung einer besonders einfachen Vorrichtung besonders hohe Raum-Zeit-Ausbeuten oder besonders kurze Verweilzeiten ermöglicht und bei Mitverwendung von die Kettenlänge regelnden Organosiliciumverbindungen und Verwendung von ausreichend wirksamem Katalysator lineare Organopolysiloxane ergibt, welche weniger als 30 Gewichts-ppm (Teile je Million) Si-gebundene Hydroxylgruppen enthalten. Diese Aufgabe wird durch die Erfindung gelöst.

Gegenstand der Erfindung ist ein kontinuierliches Verfahren zur Änderung des Molekulargewichts von linearen oder cyclischen Organo(poly)siloxanen mittels Katalysator, der mindestens bei der jeweiligen Reaktionstemperatur im Rekationsgemisch fest ist, dadurch gekennzeichnet, daß kontinuierlich und gleichzeitig Katalysator, der mindestens bei der jeweiligen Reaktionstemperatur im Reaktionsgemisch fest ist und Organo(poly)siloxan, dessen Molekulargewicht geändert werden soll, durch einen beheizten zylindrischen Reaktor, dessen Inhalt mechanisch bewegt wird, geführt werden, wobei dieser Reaktor ein Verhältnis der Länge zu Innendurchmesser von 1:1 bis 20:1 hat und in seinem Inneren bei einem Druck von 50 bis 500 hPa (abs.) gehalten wird, und das so erhaltene Gemisch nach dem Austreten aus dem Reaktor vom Katalysator befreit wird.

Als mindestens bei der jeweiligen Reaktionstemperatur im Reaktionsgemisch feste Katalysatoren können auch bei dem erfindungsgemäßen Verfahren beliebige, mindestens bei der jeweiligen Reaktionstemperatur im Reaktionsgemisch feste Katalysatoren eingesetzt werden, die bei den bisher bekannten Verfahren zur Änderung des Molekulargewichts von linearen oder cyclischen Organo(poly)siloxanen mittels mindestens bei der jeweiligen Reaktionstemperatur im Reaktionsgemisch festen Katalysators verwendet werden konnten.

Besonders bevorzugt als fester Katalysator bei der Durchführung des erfindungsgemäßen Verfahrens, weil besonders kurze Verweilzeiten ermöglichend, ist ein im Handel erhältlicher säureaktivierter Montmorillonit mit folgenden Kennzahlen:

| | |
|---|---|
| Schüttgewicht: | 450 ± 40 g/l |
| Rüttelgewicht: | 670 ± 60 g/l |
| Spezifisches Gewicht: | etwa 2,4 kg/l |
| Feuchtigkeitsgehalt (2 Stunden, 110°C): | höchstens 10 Gewichtsprozent |
| Glühverlust (1000°C): | höchstens 7 Gewichtsprozent |
| pH in 10 gewichtsprozentiger wäßriger Suspension: | 2,5 bis 3 |

Diese Bleicherde ist aus Siliciumdioxyd, Aluminiumoxyd, Eisen(III)-oxyd, Magnesiumoxyd, Natriumoxyd und Kaliumoxyd aufgebaut. 80 Gewichtsprozent dieser Bleicherde gehen durch ein Sieb mit einer lichten Maschenweite von 60 µm.

Überhaupt sind säureaktivierte Bleicherden als Katalysatoren bei der Durchführung des erfindungsgemäßen Verfahrens bevorzugt. Beispiele für Bezeichnungen von anderen im Handel erhältlichen säureaktivierten Bleicherden als dem säureaktivierten Montmorillonit mit den oben angegebenen Kennzahlen sind:

«Terrana (Registriertes Warenzeichen) L 80»
«Tonsil (Registriertes Warenzeichen) AC»
«Clarit (Registriertes Warenzeichen) Standard A»
«Nordal (Registriertes Warenzeichen)»
«Filtrol (Registriertes Warenzeichen) Ultra»
«Rumsil (Registriertes Warenzeichen)»

Weitere Beispiele für mindestens bei der jeweiligen Reaktionstemperatur im Reaktionsgemisch feste Katalysatoren sind Kaolin, Aktivkohle, Aluminiumsilikate mit Molekularsiebstruktur, sulfonierte Kohle, säureaktivierter Ruß, sulfonierte Styrol-Divinylbenzol-Mischpolymere, Aluminiumpulver und Kationen austauschende Polymere mit Sulfonylgruppen enthaltenden Seitenketten, wobei die Sulfonylgruppen jeweils an ein mindestens ein Fluoratom tragendes Kohlenstoffatom gebunden sind.

Es kann eine Art von mindestens bei der jeweiligen Reaktionstemperatur im Reaktionsgemisch festem Katalysator verwendet werden. Es können aber auch Mischungen aus mindestens zwei verschiedenen Arten derartiger Katalysatoren, z.B. Mischungen aus säureaktiviertem Montmorillonit und säureaktiviertem Ruß, verwendet werden.

Die Teilchengröße der bei dem erfindungsgemäßen Verfahren eingesetzten, mindestens bei der jeweiligen Reaktionstemperatur im Reaktionsgemisch festen Katalysatoren beträgt vorzugsweise höchstens 180 µm.

Vorzugsweise wird bei dem erfindungsgemäßen Verfahren fester Katalysator in Mengen von 0,1 bis 30 Gewichtsprozent, bezogen auf das Gesamtgewicht der gleichzeitig mit diesem Katalysator in den beheizten zylindrischen Reaktor eingeführten Organosiliciumverbindungen, eingesetzt.

Als lineare oder cyclische Organo(poly)siloxane, deren Molekulargewicht geändert werden soll, können ebenfalls auch bei dem erfindungsgemäßen Verfahren beliebige lineare oder cyclische Organo(poly)siloxane eingesetzt werden, die bei den bisher bekannten kontinuierlichen Verfahren zur Änderung des Molekulargewichts von linearen oder cyclischen Organo(poly)siloxanen mittels bei der jeweiligen Reaktionstemperatur im Reaktionsgemisch festen Katalysators verwendet werden konnten.

Beispiele für derartige Organo(poly)siloxane sind insbesondere solche der Formel

$$(R_2SiO)_x \text{ und } HO(SiR_2O)_nH$$

wobei R jeweils einen einwertigen, gegebenenfalls substituierten Kohlenwasserstoffrest, oder Wasserstoff mit der Maßgabe, daß an ein Siliciumatom höchstens ein Wasserstoffatom gebunden ist, x eine ganze Zahl im Wert von 3 bis 8 und n ganze Zahlen im Wert von 1, vorzugsweise mindestens 2, bis höchstens demjenigen Wert, der einer durchschnittlichen Viskosität von höchstens 1000 mPa.s bei 25°C entspricht, bedeutet.

Beispiele für Kohlenwasserstoffreste R sind Methyl-, Ethyl-, Vinyl- und Phenylreste. Beispiele für substituierte Kohlenwasserstoffreste R sind insbesondere halogenierte Kohlenwasserstoffreste, wie der 3,3,3-Trifluorpropylrest und Chlorphenylreste, sowie aus Kohlenstoff-, Wasserstoff-, Ethersauerstoff- und Fluoratomen aufgebaute aliphatische Reste, wie der 1,1,2,3,3,3-Hexafluorpropyloxypropylrest und der 1,1,2,2-Tetrafluorethyloxypropylrest. Wegen der leichteren Zugänglichkeit sind vorzugsweise mindestens 80% der Anzahl der Kohlenwasserstoffreste R Methylreste.

Es kann eine Art von Organo(poly)siloxan, dessen Molekulargewicht geändert werden soll, bei dem erfindungsgemäßen Verfahren eingesetzt werden. Es können aber auch Mischungen aus mindestens zwei verschiedenen Arten derartiger Organo(poly)siloxane eingesetzt werden, so daß gleichzeitig mit der Änderung des Molekulargewichts eine Äquilibrierung von verschiedenen Organo(poly)siloxanen stattfinden kann.

Bei dem erfindungsgemäßen Verfahren können Organosiliciumverbindungen, welche die Kettenlänge regeln, mitverwendet werden. Dabei können beliebige, die Kettenlänge regelnde Organosiliciumverbindungen eingesetzt werden, die bei den bisher bekannten Verfahren zur Änderung des Molekulargewichts von linearen oder cyclischen Organo(poly)siloxanen mitverwendet werden konnten. Beispiele für derartige, die Kettenlänge regelnde Organosiliciumverbindungen sind insbesondere solche der Formel

$$R(SiR_2O)_mSiR_3$$

wobei R die oben dafür angegebene Bedeutung hat und m eine ganze Zahl im Wert von 1 bis 50 ist, sowie der Formel

$$(R_3Si)_2NH$$

wobei R ebenfalls die oben dafür angegebene Bedeutung hat. Wichtige einzelne Beispiele für derartige Verbindungen sind Hexamethyldisiloxan, 1,3-Divinyl-1,1,3,3-tetramethyldisiloxan, 1,3-Dihydrogen-1,1,3,3-tetramethyldisiloxan und Hexamethyldisilazan.

Die Menge von die Kettenlänge regelnder Organosiliciumverbindung hängt, wie dem Fachmann wohlbekannt, von der gewünschten Kettenlänge ab. Je größer die Menge an mitverwendeter, die Kettenlänge regelnder Organosiliciumverbindung ist, desto niedriger ist die Viskosität der erhaltenen Organopolysiloxane. Diese Menge ist vorzugsweise mindestens so groß, daß die bei dem erfindungsgemäßen Verfahren erhaltenen Organopolysiloxane eine durchschnittliche Viskosität von höchstens 50 000 mPa.s bei 25°C haben und somit leicht durch Filtrieren vom Katalysator befreit werden können.

Der Katalysator kann getrennt von bei dem erfindungsgemäßen Verfahren eingesetzter Siliciumverbindung in den bei diesem Verfahren verwendeten Reaktor eingeführt werden. Es kann aber auch eine pumpfähige Mischung aus mindestens bei der jeweiligen Reaktionstemperatur im Reaktionsgemisch festem Katalysator und bei dem erfindungsgemäßen Verfahren eingesetzter Organosiliciumverbindung in den bei diesem Verfahren verwendeten Reaktor eingeführt werden. Die Herstellung einer derartigen pumpfähigen Mischung kann beispielsweise dadurch erfolgen, daß in mindestens einem Gefäß Katalysator und Organosiliciumverbindung(en), gegebenenfalls unter Erwärmen auf vorzugsweise bis zu 60°C, mittels eines Rührers miteinander vermischt werden.

Wenn das Organo(poly)siloxan, dessen Molekulargewicht erhöht werden soll, nicht schon beim Vermischen mit dem Katalysator erwärmt wurde, so kann dies oder ein nicht bereits beim Vermischen erwärmtes Gemisch aus Katalysator und Organo(poly)siloxan, dessen Molekulargewicht geändert werden soll, vor dem Einführen in den beheizten zylindrischen Reaktor, z.B. in einem Wärmeaustauscher, auf vorzugsweise bis zu 105°C erwärmt werden.

Der beheizte zylindrische Reaktor ist vorzugsweise ein Rohr, das durch einen Mantel um dieses Rohr beheizt wird. Vorzugsweise beträgt das Verhältnis von Länge zu Innendurchmesser 6:1 bis 8:1, insbesondere 7:1 oder etwa 7:1.

Vorzugsweise wird der bei dem erfindungsgemäßen Verfahren verwendete Reaktor in einem solchen Ausmaß beheizt, daß die Temperatur seines Inhalts 80° bis 180°C, insbesondere 120° bis 140°C, beträgt.

Die mechanische Bewegung des Inhalts des beheizten zylindrischen Reaktors erfolgt vorzugsweise durch einen Rührer, der mindestens 2 Flügel aufweist oder ein anderes für die Bewegung des Inhalts des Reaktors geeignetes Rührorgan, mit dem der Reaktor ausgestattet ist.

Vorzugsweise beträgt die Rührgeschwindigkeit 800 bis 1200 Umdrehungen je Minute.

Der Reaktor kann stehend oder liegend angeordnet sein. Vorzugsweise ist er stehend angeordnet. Wenn er stehend angeordnet ist, wird gemäß einer bevorzugten Ausführungsform des erfindungsgemäßen Verfahrens eine pumpfähige Mischung aus Katalysator und Organosiliciumverbindung(en) mittels einer Dosierpumpe von unten in den Reaktor eingeführt und am oberen Ende des Reaktors das Gemisch aus Organopolysiloxan und Katalysator aus dem Reaktor mittels einer vakuumdichten Pumpe, z.B. einer Zahnradpumpe, entnommen, wobei sich oberhalb des

Auslasses für das aus dem Reaktor austretende Gemisch aus Organopolysiloxan und Katalysator ein absteigender Kühler befindet, in dem das bei der Kondensation Si-gebundender Hydroxylgruppen im Reaktor gebildete Wasser kondensiert und der mit der Pumpe verbunden ist, die das Innere des Reaktors bei einem Druck von 50 bis 500 hPa (abs.) hält. Beträgt der Druck im Inneren des Reaktors weniger als 50 hPa (abs.), so werden gleichzeitig mit dem Wasser zuviel cyclische Organopolysiloxane ausgetragen und es bilden sich zur Einstellung des Gleichgewichts zu viele cyclische Organopolysiloxane im Reaktor nach. Beträgt der Druck im Inneren des Reaktors mehr als 500 mPa (abs.), so sind die Raum-Zeit-Ausbeuten nicht genügend hoch.

Wenn der Katalysator nicht im Gemisch mit Organo(poly)siloxan, dessen Molekulargewicht geändert werden soll, in den Reaktor eingeführt wird, wobei die Anwendung eines derartigen Gemisches jedoch wegen der größeren Einfachheit bevorzugt ist, so kann er z.B. am oberen Ende des Reaktors in diesen mittels einer Dosierschnecke eingeführt werden.

Verweilzeiten des Gemisches aus Katalysator und Organosiliciumverbindung(en) in dem Reaktor von höchstens 5 Minuten sind meist ausreichend.

Das Befreien des aus dem Reaktor ausgetretenen Gemisches von Katalysator kann auf beliebige für das Abtrennen von Festkörper aus Suspensionen geeignete und vielfach bekannte Weise, z.B. Filtrieren oder Zentrifugieren, was vorzugsweise ebenfalls kontinuierlich durchgeführt wird, erfolgen. So abgetrennter Katalysator kann, gegebenenfalls nach Vermischen mit frischem Katalysator, wieder bei dem erfindungsgemäßen Verfahren eingesetzt werden. Nachdem jeweils zehnmal Katalysator mit den oben angegebenen Kennzahlen bei dem erfindungsgemäßen Verfahren eingesetzt und nach dem Abtrennen vom Organopolysiloxan wieder in dieses Verfahren zurückgeführt wurde, konnte noch kein Nachlassen seiner Wirksamkeit festgestellt werden.

Wenn keine zu leicht flüchtigen Organosiliciumverbindungen bei dem erfindungsgemäßen Verfahren eingesetzt werden, kann gleichzeitig mit dem erfindungsgemäßen Verfahren erfolgendes Durchleiten von gegenüber den bei diesem Verfahren eingesetzten flüssigen und festen Stoffen inerten Gasen, wie Luft oder Stickstoff, durch den Reaktor den Vorteil haben, daß der Katalysator noch länger wirksam bleibt.

Aus dem vom Katalysator befreiten Organopolysiloxan können durch Destillation die niedriger als das gewünschte Organopolysiloxan siedenden Organosiliciumverbindungen entfernt und wieder bei dem erfindungsgemäßen Verfahren eingesetzt werden.

In den folgenden Beispielen beziehen sich alle Angaben von Teilen und Prozentsätzen jeweils auf das Gewicht, soweit nichts anderes angegeben ist.

*Beispiel 1*

Eine durch Vermischen der Bestandteile unter Rühren bei Raumtemperatur hergestellte Mischung aus

| | |
|---|---|
| 100 Teilen | in den endständigen Einheiten je eine Si-gebundene Hydroxylgruppe aufweisenden Dimethylpolysiloxans mit einer Viskosität von 140 mPa.s bei 25°C, |
| 5,4 Teilen | Hexamethyldisiloxan |
| 3 Teilen | säureaktiviertem Montmorillonit mit den oben angegebenen Kennzahlen |

wird kontinuierlich mittels einer regelbaren Membranpumpe in einer Menge von 6720 ml je Stunde zunächst durch einen Wärmeaustauscher geführt, wo sie auf 105°C erwärmt wird, und dann von unten in einen senkrecht angeordneten, zylindrischen Reaktor mit einer Länge von 385 mm und einem Innendurchmesser von 57 mm und einem Inhalts-Volumen von 981 ml eingeführt, so daß sich eine Verweilzeit von 4,4 Minuten ergibt, weil der flüssige Inhalt des Reaktors am oberen Ende des Reaktors mit einer Zahnradpumpe kontinuierlich entnommen wird. Der Inhalt des Reaktors wird mittels eines Heizmantels bei 130°C gehalten und mit einem Laborrührer mit 1000 Umdrehungen je Minute mechanisch bewegt. Oberhalb des Auslasses für das aus dem Reaktor austretende Gemisch aus Organopolysiloxan und Katalysator befindet sich ein absteigender Kühler, worin praktisch nur Wasser kondensiert und der mit einer Pumpe verbunden ist, die das Innere des Reaktors bei einem Druck von 180 hPa (abs.) hält.

Das aus dem Reaktor ausgetretene Gut wird mittels Filtration durch eine Nutsche vom Katalysator befreit. Aus dem Filtrat werden die niedriger als bei 150°C und 0,5 hPa (abs.) siedenden Anteile abdestilliert und ebenso wie der auf der Nutsche verbliebene Katalysator wieder bei der Herstellung der Mischung, deren Bestandteile eingangs in diesem Beispiel angegeben wurden, unter teilweisem Ersetzen der Menge an Dimethylpolysiloxan mit endständigen Hydroxylgruppen durch diese niedriger siedenden Anteile, eingesetzt.

Als Rückstand bei der vorstehend beschriebenen Destillation werden etwa 90 Teile durch Trimethylsiloxygruppen endblockiertes Dimethylpolysiloxan mit einer Viskosität von 50 mPa.s bei 25°C erhalten. Dieses Organopolysiloxan enthält weniger als 30 Gewichts-ppm Si-gebundene Hydroxylgruppen und bei 16 Stunden Erwärmen auf 200°C beträgt die Viskositätsänderung nur 2 mPa.s, gemessen bei 25°C.

*Beispiel 2*

Die in Beispiel 1 beschriebene Arbeitsweise wird wiederholt, mit der Abänderung, daß 1,9 Teile Hexamethyldisiloxan anstelle der 5,4 Teile Hexamethyldisiloxan eingesetzt werden. Es werden etwa 90 Teile durch Trimethylsiloxygruppen endblockiertes Dimethylpolysiloxan mit einer Viskosität von 250 mPa.s bei 25°C erhalten. Dieses Organopolysiloxan enthält weniger als 30 Gewichts-ppm Si-gebundene Hydroxylgruppen und bei 16 Stunden Erwärmen auf 200°C beträgt die Viskositätsänderung nur 2 mPa.s, gemessen bei 25°C.

*Beispiel 3*

Die in Beispiel 1 beschriebene Arbeitsweise wird wiederholt, mit der Abänderung, daß 1,0 Teile Hexamethyldisiloxan anstelle der 5,4 Teile Hexamethyldisiloxan eingesetzt werden. Es werden etwa 90 Teile durch Trimethylsiloxygruppen endblockiertes Dimethylpolysiloxan mit einer Viskosität von 1000 mPa.s bei 25°C erhalten. Dieses Organopolysiloxan

enthält weniger als 30 Gewichts-ppm Si-gebundene Hydroxylgruppen und bei 16 Stunden Erwärmen auf 200°C beträgt die Viskositätsänderung nur 20 mPa.s, gemessen bei 25°C, was nur 2% von 1000 mPa.s ist.

*Vergleichsversuch*

Die in Beispiel 3 angegebene Arbeitsweise wird wiederholt mit der Abänderung, daß der Inhalt des Reaktors nicht bei 180 hPa (abs.), sondern beim Druck der umgebenden Atmosphäre, also etwa 1000 hPa (abs.) gehalten wird und nur 1380 ml der Mischung je Stunde in den Reaktor eingeführt werden, was eine Verweilzeit von 21,7 Minuten ergibt. Es werden zwar ebenfalls fast 90 Teile durch Trimethylsiloxygruppen endblockiertes Dimethylpolysiloxan erhalten. Dieses Organopolysiloxan hat jedoch nur eine Viskosität von 280 mPa.s, was u.a. ein Anzeichen für ungenügende Äquilibrierung trotz der viel längeren Verweilzeit ist.

*Beispiel 4*

Die in Beispiel 1 beschriebene Arbeitsweise wird wiederholt mit der Abänderung, daß 100 Teile Octamethylcyclotetrasiloxan anstelle der 100 Teile des linearen Dimethylpolysiloxans und 11,1 Teile Hexamethyldisiloxan anstelle der 5,4 Teile Hexamethyldisiloxan eingesetzt werden. Es werden etwa 90 Teile durch Trimethylsiloxygruppen endblockiertes Dimethylpolysiloxan mit einer Viskosität von 20 mPa.s bei 25°C erhalten.

*Beispiel 5*

Die in Beispiel 1 beschriebene Arbeitsweise wird wiederholt mit der Abänderung, daß 11,3 Teile durch Trimethylsiloxygruppen endblockiertes Dimethylpolysiloxan mit einer Viskosität von 20 mPa.s bei 25°C anstelle der 5,4 Teile Hexamethyldisiloxan verwendet werden. Es werden etwa 90 Teile durch Trimethylsiloxygruppen endblockiertes Dimethylpolysiloxan mit einer Viskosität von 1000 mPa.s bei 25°C erhalten. Dieses Organopolysiloxan enthält weniger als 30 Gewichts-ppm Si-gebundene Hydroxylgruppen.

**Patentansprüche**

1. Kontinuierliches Verfahren zur Änderung des Molekulargewichts von linearen oder cyclischen Organo(poly)siloxanen mittels Katalysator, der mindestens bei der jeweiligen Reaktionstemperatur im Reaktionsgemisch fest ist, dadurch gekennzeichnet, daß kontinuierlich und gleichzeitig Katalysator, der mindestens bei der jeweiligen Reaktionstemperatur im Reaktionsgemisch fest ist, und Organo(poly)siloxan, dessen Molekulargewicht geändert werden soll, durch einen beheizten zylindrischen Reaktor, dessen Inhalt mechanisch bewegt wird, geführt werden, wobei dieser Reaktor ein Verhältnis der Länge zu Innendurchmesser von 1:1 bis 20:1 hat und in seinem Inneren bei einem Druck von 50 bis 500 hPa (abs.) gehalten wird, und das so erhaltene Gemisch nach dem Austreten aus dem Reaktor von Katalysator befreit wird.

2. Verfahren nach Anspruch 1, dadurch gekennzeichnet, daß als mindestens bei der jeweiligen Reaktionstemperatur im Reaktionsgemisch fester Katalysator säureaktivierte Bleicherde verwendet wird.

**Claims**

1. Continuous process for modifying the molecular weight of linear or cyclic organo(poly)siloxanes by means of a catalyst which is solid in the reaction mixture, at least at the particular reaction temperature, characterized in that the catalyst which is solid in the reaction mixture, at least at the particular reaction temperature, and the organo(poly)siloxane whose molecular weight is to be modified are passed continuously and simultaneously through a heated cylindrical reactor whose contents are mechanically agitated, this reactor having a length: internal diameter ratio of from 1:1 to 20:1 and in its interior being held at a pressure of from 50 to 500 hPa (abs), and the mixture obtained in this way is freed from catalyst after emergence from the reactor.

2. Process according to Claim 1, characterized in that the catalyst which is solid in the reaction mixture, at least at the particular reaction temperature, is acid-activated bleaching earth.

**Revendications**

1. Procédé continu pour modifier la masse moléculaire de (poly)organosiloxanes linéaires ou cycliques, au moyen d'un catalyseur qui est solide au moins à la température réactionnelle appliquée dans le mélange réactionnel, procédé caractérisé en ce qu'on fait passer en continu et en même temps le catalyseur qui est solide au moins à la température réactionnelle dans le mélange réactionnel et le (poly)organosiloxane dont on veut modifier la masse moléculaire, à travers un réacteur cylindrique chauffé dont le contenu est remué mécaniquement, ce réacteur ayant un rapport de sa longueur à son diamètre intérieur compris entre 1:1 et 20:1, et étant maintenu, en son intérieur, sous une pression de 50 à 500 hPa (pression absolue), et, du mélange ainsi obtenu, après sa sortie du réacteur, on élimine le catalyseur.

2. Procédé selon la revendication 1 caractérisé en ce qu'on utilise une terre décolorante activée par un acide comme catalyseur solide au moins à la température réactionnelle appliquée dans le mélange réactionnel.